# EUROPEAN PATENT SPECIFICATION

(11) **EP 3 825 900 B1**
(45) Date of publication and mention of the grant of the patent: **15.06.2022**
(21) Application number: 20196205.7
(22) Date of filing: 15.09.2020
(51) Int. Cl.: G06K 7/10, G07G 1/00, G06Q 20/20

(54) **INFORMATION PROCESSING DEVICE, INFORMATION PROCESSING SYSTEM, AND METHOD**
INFORMATIONSVERARBEITUNGSVORRICHTUNG, INFORMATIONSVERARBEITUNGSSYSTEM UND VERFAHREN
DISPOSITIF DE TRAITEMENT D'INFORMATIONS, SYSTÈME DE TRAITEMENT D'INFORMATIONS ET PROCÉDÉ

(30) Priority: 25.11.2019 JP 2019211938
(43) Date of publication of application: 26.05.2021
(73) Proprietor: Toshiba TEC Kabushiki Kaisha, Tokyo 141-8562 (JP)
(72) Inventor: Suzuki, Yuki, Tokyo, 141-8562 (JP)
(74) Representative: Hoffmann Eitle

(56) References cited:
- EP-A1- 2 933 653
- EP-A1- 3 035 072
- EP-A1- 3 454 276
- US-A1- 2007 182 367
- US-A1- 2014 002 013
- US-A1- 2015 304 809

## Description

### FIELD

Embodiments described herein relate generally to an information processing device, an information processing system, and a method performed thereby.

### BACKGROUND

In a distribution system or a logistics system, in order to identify a commodity, it is known to attach a coded symbol, such as a barcode or a two-dimensional code, to the commodity and then optically read or scan the symbol to obtain information about the commodity.

More recently, a radio frequency identification (RFID) technology has been used in such a distribution system or a logistics system, and information on a commodity is wirelessly read from an RFID tag (also referred to as a wireless tag) attached to the commodity.

This RFID technology using wireless tags is also used in a retail store, such as a supermarket or a convenience store. However, there are still some types of commodities sold in such stores to which only optical scanning (coded) symbols are attached instead of wireless tags. When commodities having wireless tags and coded symbols are both being purchased by a customer, a store clerk or the like needs to separate the wireless tagged commodities from those commodities labeled with only a coded symbol or the like so that the clerk can use an optical code reader of a point-of-sale (POS) terminal to manually scan and register the commodities that lack a wireless tag by reading the coded symbols with the optical code reader since a wireless tag reader can only be used to read and register the commodities having wireless tags thereon. Furthermore, the store clerk needs to separate out and identify commodities having neither wireless tags nor coded symbols from the other commodities. Thus, there is a need for a method of quickly distinguishing commodities having wireless tags, coded symbols, or neither.

EP 3 454 276 A1 (TOSHIBA TEC KK [JP]) describes a reading apparatus including an antenna, provided under a placing surface on which a placing area is formed. The antenna is configured to radiate radio waves capable of communicating with an RFID tag attached to a commodity placed in the placing area on the placing surface. The apparatus includes a moving module configured to move the antenna in the placing area in parallel with the placing surface, a detector configured to detect a position of the antenna within the placing area, a change module configured to change an output of the antenna according to the position of the antenna detected by the detector, and a reading module configured to read information from the RFID tag via the antenna.

US 2015/304809 A1 (SCHLECHTER THOMAS [AT]) relates to a method for optimizing the locating accuracy of an RFID tag in an ultra-high frequency radio range in a system for locating RFID tags comprising a plurality of reading devices. In a method for optimizing the locating accuracy of an RFID tag in an ultra-high frequency radio range in a system for locating RFID tags in a room comprising a plurality of reading devices, a first step of locating of the RFID tag is initially carried out using methods known from the prior art, whereby for this purpose the RFID tag is detected by at least one reading device. Thereafter cold spots, i.e., points with minimal amplitude, are generated or moved in a targeted fashion in the room using a predetermined variation of the phase position, the frequency and/or the transmission amplitude of the individual reading devices, whereby their location and volume as a function of the phase position, the frequency and the transmission amplitude of the individual reading devices is known by means of simulations and/or measurements. If an RFID tag is no longer detected by any reading device, the same is located in a cold spot, which is identified by means of the first, rough locating of the RFID tag using methods known from the prior art, which allows for accurate locating of the RFID tag.

EP 2 933 653 A1 (SKIDATA AG) describes, in a method for optimizing the locating accuracy of an RFID tag in an ultra-high frequency radio range in a system for locating RFID tags in a room comprising a plurality of reading devices, a first step of locating of the RFID tag initially carried out using methods known from the prior art, whereby for this purpose the RFID tag is detected by at least one reading device. Thereafter cold spots, i.e., points with minimal amplitude, are generated or moved in a targeted fashion in the room using a predetermined variation of the phase position, the frequency and/or the transmission amplitude of the individual reading devices, whereby their location and volume as a function of the phase position, the frequency and the transmission amplitude of the individual reading devices is known by means of simulations and/or measurements. If an RFID tag is no longer detected by any reading device, the same is located in a cold spot, which is identified by means of the first, rough locating of the RFID tag using methods known from the prior art, which allows for accurate locating of the RFID tag.

EP 3 035 072 A1 (SIEMENS AG [DE]) describes a method and a system which allows to define areas of coverage as well as find out the direction in which an RFID transponder is located. The solution features an artificially generated Doppler effect (aka pseudo-Doppler). The Doppler Effect is a change in the phase and frequency of a signal due to the relative change in the distance between the sender and receiver. In a first step, a phase difference determination between the phase of transmitted signal and the phase of received signal for each of the coupled antennas is provided. In a second step, a calculation of the receiving angle by comparison of the multiple phase differences determined in the first step is conducted.

US 2007/182367 A1 (PARTOVI AFSHIN [US]) discloses a portable inductive power source, power device, or unit, for use in powering or charging electrical, electronic, battery-operated, mobile, and other devices. In accordance with an embodiment the system comprises a pad or similar base unit that contains a primary, which creates an alternating magnetic field by means of applying an alternating current to a winding, coil, or any type of current carrying wire. A receiver comprises a means for receiving the energy from the alternating magnetic field from the pad and transferring it to a mobile or other device. In some embodiments the receiver can also comprise electronic components or logic to set the voltage and current to the appropriate levels required by the mobile device, or to communicate information or data to and from the pad. Embodiments may also incorporate efficiency measures that improve the efficiency of power transfer between the charger and receiver.

US 2014/002013 A1 (KOSSI JOUNI OLAVI [Fl] ET AL) describes a method, apparatus and computer program product for wireless charging. An indicator displayed on a wireless device may assist a user in placing the device in a more efficient position on a wireless charger. The indicator may comprise an image, and moving the device such that the image aligns with an image on a wireless charger places the device is in a more efficient charging position. Other types of indicators may be displayed to assist a user in moving a device to a more efficient position on the wireless charger.

### SUMMARY OF THE INVENTION

One of the objects of the present invention is to improve prior art techniques and overcome at least some of the prior art problems as for instance above illustrated. The object is achieved by the appended claims. Examples are provided to facilitate the understanding of the present disclosure.

According to a first example, it is provided an information processing apparatus, comprising a table with an embedded display device having a surface on which an object with a wireless tag can be placed; an antenna unit that is configured to move along a predetermined path and to transmit an interrogation wave for reading information from wireless tags and receive a response wave from wireless tags at different positions on the predetermined path; and a controller configured to calculate changes in phase difference between the interrogation wave and the response wave received at the different positions, determine a location of a wireless tag on the surface of the embedded display device using the calculated changes in the phase difference, and control the embedded display device to indicate the determined location.

Optionally, in the information processing apparatus according to a first example, the predetermined path is below the surface of the embedded display device.

Optionally, in the information processing apparatus according to a first example, the controller determines the location of the wireless tag as position having with a smallest phase difference between the interrogation wave and response wave.

Optionally, in the information processing apparatus according to a first example, the controller is further configured to determine intensities of the response waves at the different positions, and the location of the wireless tag is determined using the determined intensities.

Optionally, the information processing apparatus according to a first example, further comprises a memory, wherein the controller is further configured to store in the memory the phase differences and the intensities of the response waves in association with coordinates indicating the different positions on the predetermined path.

Optionally, the information processing apparatus according to a first example, further comprises a moving mechanism to which the antenna unit is attached.

Optionally, the information processing apparatus according to a first example, further comprises a plurality of metal walls arranged on edges of the surface of the embedded display device.

Optionally, in the information processing apparatus
according to a first example, the embedded display device includes a two-dimensional array of LEDs.

Optionally, in the information processing apparatus according to a first example, the controller is further configured to register the object in a sales transaction based on product information included in the response wave.

Optionally, the information processing apparatus according to a first example, further comprises an optical code reader configured to read a code symbol on an object.

According to a second example, it is provided an information processing method, comprising transmitting, from a movable antenna, an interrogation wave toward a wireless tag attached to an object placed on a surface of a display device;
receiving, with the movable antenna, a response wave from the wireless tag at different positions on a predetermined movement path of the antenna; calculating changes in phase difference between the interrogation wave and the response wave at the different positions; identifying a location of the wireless tag on the surface of the display device using the calculated changes in the phase difference; and controlling the display device to indicate the identified location of the wireless tag.

Optionally, in the method according to a second example, the predetermined path is under the surface of the display device.

Optionally, in the method according to a second example, the location of the wireless tag is identified as the position on the predetermined path at which the calculated phase difference is the smallest.

Optionally, the method according to a second example, further comprises determining intensities of the response wave at the different positions, wherein the location of the wireless tag is determined using the determined intensities.

Optionally, the method according to a second example, further comprises storing in a memory the phase differences and the intensities of the response waves in association with coordinates indicating the positions on the predetermined path.

Optionally, in the method according to a second example, the movable antenna is moved by a moving mechanism under the surface of the display along longitudinal and lateral directions of the display device.

Optionally, in the method according to a second example, a plurality of metal walls arranged on edges of the surface of the display device.

Optionally, in the method according to a second example, the display device includes a two-dimensional array of LEDs.

Optionally, in the method according to a second example, the object is an item of merchandise in a sales transaction.

According to a third example, it is provided an information processing system, comprising an information processing apparatus according to the first example; and a point of sale terminal communicably connected to the information processing apparatus.

### DESCRIPTION OF THE DRAWINGS

FIG. 1 is a diagram illustrating an information processing system according to an embodiment.
FIG. 2 is a schematic perspective view of a wireless tag reader.
FIG. 3 is a diagram illustrating a movement path of an antenna in a wireless tag reader.
FIG. 4 is a block diagram of a wireless tag reader.
FIG. 5 is a block diagram of a POS terminal.
FIG. 6 is a data structure of phase information.
FIG. 7 is a diagram illustrating changes in phase difference between interrogation waves and response waves.
FIG. 8 is a block diagram of a wireless tag reader.
FIG. 9 is a flow chart of control processing performed by the wireless tag reader.
FIG. 10 is a block diagram of a POS terminal.
FIG. 11 is a flow chart of control processing performed by the POS terminal.

### DETAILED DESCRIPTION

One or more embodiments provide an information processing device, an information processing system, and a method capable of distinguishing a commodity to which a wireless tag is attached from a commodity to which a wireless tag is not attached.

According to one embodiment, an information processing apparatus comprises a table with an embedded display device. Embedded display device has a surface on which an object with a wireless tag can be placed. An antenna unit is configured to move along a predetermined path and to transmit an interrogation wave for reading information from wireless tags. The antenna unit is configured to receive a response wave from wireless tags at different positions along the predetermined path. A controller is configured to: calculate changes in phase difference between the interrogation wave and the response wave received at the different positions; determine a location of a wireless tag on the surface of the embedded display device using the calculated changes in the phase difference; and then control the embedded display device to indicate the determined location.

Hereinafter, example embodiments are described with reference to drawings. In an embodiment, a POS terminal is described as an example of an information processing device, and merchandise sold in a store is described as an example of a commodity. Hereinafter, the commodity is referred to as an item of merchandise. Example embodiments described herein are not limitations on the present disclosure and various modifications, alterations, and adaptations to these examples will be apparent from the following descriptions.

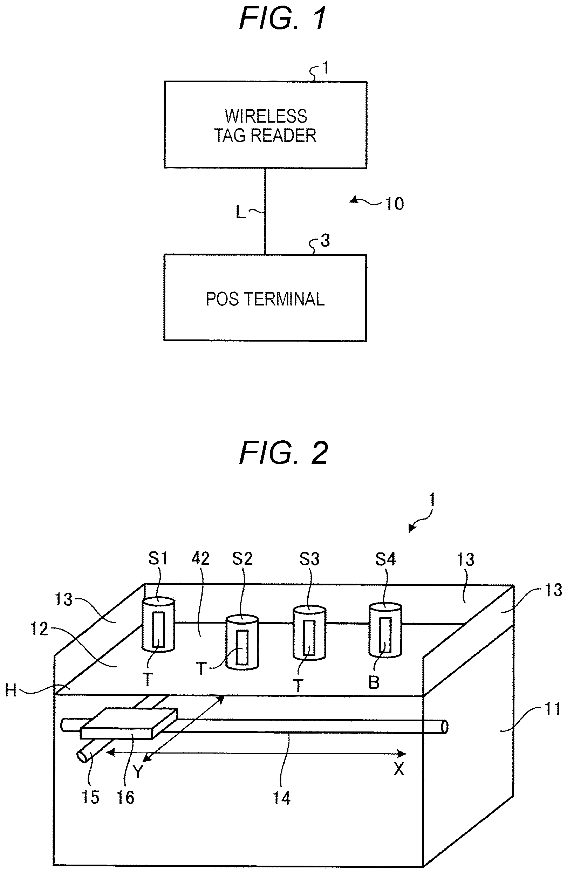

FIG. 1 is a diagram illustrating an information processing system 10. For example, the information processing system 10 is used in a store such as a supermarket, a convenience store, and a mass retail store, and includes a wireless tag reader 1 and a POS terminal 3. The wireless tag reader 1 and the POS terminal 3 are electrically and communicably connected to each other via a communication line L.

FIG. 2 is a schematic perspective view of the wireless tag reader 1. The wireless tag reader 1 includes a merchandise table 11. The merchandise table 11 has a substantially rectangular parallelepiped shape. The merchandise table 11 includes a countertop display 42, which is connected to the POS terminal 3 and can be controlled by the POS terminal 3 to display information thereon. The countertop display 42 has an upper surface 12 on which merchandise can be placed. The countertop display 42 comprises, for example, a liquid crystal display panel or a plurality of light emitting diodes (LED) arranged in a two-dimensional array. The countertop 42 displays information upwards toward the upper surface 12.

An item of merchandise to which a wireless tag T is attached and an item merchandise to which a wireless tag T is not attached can be placed, in a mixed manner, on the upper surface 12. In an embodiment, a merchandise S1, a merchandise S2, and a merchandise S3 are items of merchandise to which the wireless tags T are attached, and a merchandise S4 is an item of merchandise to which a symbol B is attached instead of a wireless tag. The wireless tag reader 1 includes three walls 13 surrounding the upper surface 12 from three sides. For example, the walls 13 are made of metal, and limit radio waves transmitted from the antenna 16 and radio waves transmitted from the wireless tags T, from leaking to the surroundings. Therefore, the wireless tag reader 1 can read tag information of the merchandises S placed inside the walls 13, but it is difficult to read information of a wireless tag outside the walls 13. The walls 13 are not limited to any particular structure and, in some examples, one, two, or all of the walls 13 may be omitted

The merchandise table 11 includes antenna 16. The antenna 16 is provided below the countertop display 42. The antenna 16 transmits tag interrogation waves (also referred to as transmission waves) upwardly. The wireless tags T attached to the items of merchandises (e.g., the merchandises S1, S2, and S3) on the upper surface 12 receive these interrogation waves. The wireless tags T then transmit response waves in response to received interrogation waves. The response waves include information (e.g., individual merchandise information for specifying the corresponding merchandise, commodity codes, or the like) relating to the particular items to which the wireless tags have been attached. The antenna 16 receives the response waves transmitted by the wireless tags T. Since a wireless tag T is not attached to the merchandise S4, the antenna 16 cannot read any information for the merchandise S4.

The antenna 16 is mounted on a moving mechanism 14 and a moving mechanism 15. The moving mechanism 14 can move the antenna 16 back and forth along X axis directions. The the moving mechanism 15 can move the antenna 16 along Y axis directions.

The antenna 16 can be moved along the X axis while transmitting an interrogation wave. After the antenna 16 moves by a first distance (or for a first time), the wireless tag reader 1 stores the information of received response waves from the wireless tags T. The wireless tag reader 1 also stores information regarding the transmitted transmission wave in association with information about the received response waves. After the antenna 16 has moved by a second distance (or for a second time), the moving mechanism 15 moves the antenna 16 in the Y direction by a predetermined distance. The moving mechanism 14 then moves the antenna 16 back across the countertop display in an X axis direction, while the antenna 16 is transmitting the transmission wave. The antenna 16 repeats scans back and forth along the X axis direction while moving antenna incrementally in the Y axis direction after each antenna scan (pass) along the X axis direction.

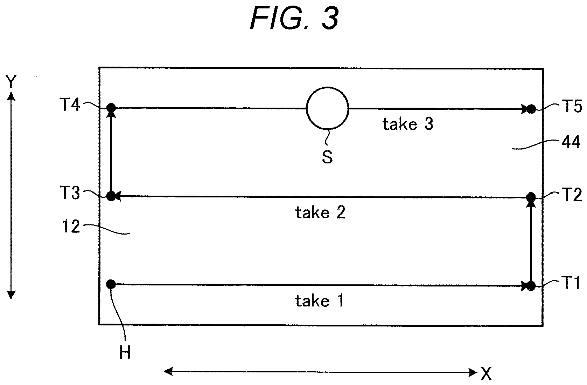

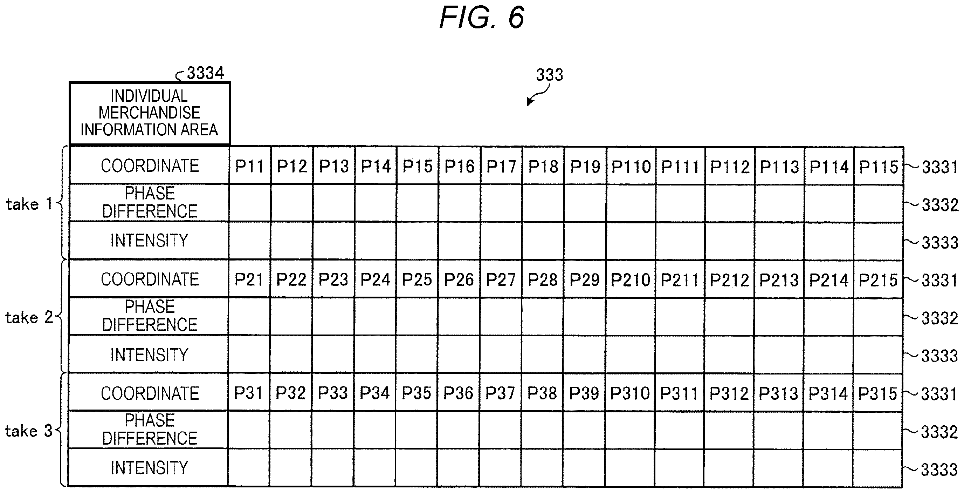

Here, the movement of the antenna 16 is more specifically described. FIG. 3 is a diagram illustrating a moving path of the antenna 16 in the wireless tag reader 1. As illustrated in FIG. 3, the antenna 16 is positioned at a home position H (for example, a lower left position on the upper surface 12) at an initial state. First, while transmitting the transmission wave, the antenna 16 moves in the X direction (that is, moves from left to right along the X axis in FIG. 3) from the home position H (take 1). Every time the antenna 16 moves by the predetermined first distance (that is, each position of P11 to P115 in FIG. 6 described later), the antenna 16 stores information about the received response wave in correlation with information about the transmitted transmission wave. If the antenna 16 moves from the home position H by the predetermined second distance and reaches a position T1, the antenna 16 stops moving in the X axis direction.

Subsequently, if the antenna 16 moves from the position T1 in the Y axis direction by the predetermined distance and reaches a position T2, the antenna 16 stops moving in the Y axis direction. Subsequently, the antenna 16 moves from the position T2 in the X axis direction while transmitting the transmission wave and reaches a position T3 (take 2). Subsequently, if the antenna 16 moves from the position T3 in the Y axis direction by a predetermined distance and reaches a position T4, the antenna 16 stops moving in the Y axis direction. Subsequently, while the antenna 16 transmits the transmission wave, the antenna 16 moves from the position T4 in the X direction and reaches a position T5 (take 3). The antenna 16 that has reached the position T5 moves back to the home position H.

For simplification of the description, the movements of the antenna 16 in the X axis direction are described as H->T1, T2->T3, and T4->T5, and the movements in the Y axis direction are described as T1->T2 and T3->T4. However, the antenna 16 may be moved three or more times in the Y axis direction.

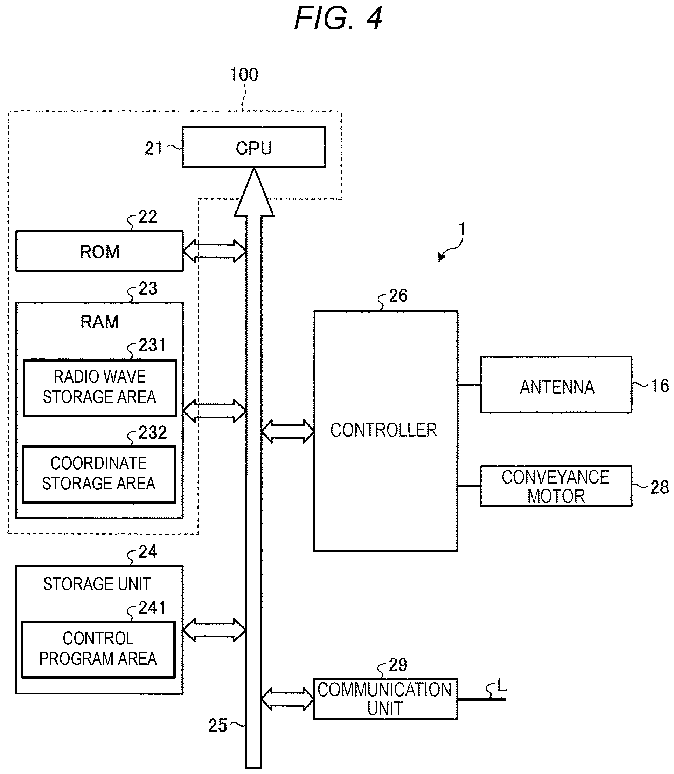

The wireless tag reader 1 stores XY coordinates of a position where the antenna 16 is currently positioned. The wireless tag reader 1 sets the coordinates when the antenna 16 is positioned at the home position H as the origin (coordinates (0, 0)). If the antenna moves in the X axis direction, the wireless tag reader 1 (a control unit 100 in FIG. 4 described later) updates the X coordinate by a moving distance from the home position H, and if the antenna moves in the Y axis direction, the wireless tag reader 1 updates the Y coordinate by a moving distance from the home position H. For example, the value of the coordinates indicates a distance from the home position in millimeters. That is, if the antenna 16 moves, the wireless tag reader 1 updates the coordinates of the antenna 16 in real time and constantly calculates the current coordinates of the antenna 16 as coordinate information.

The POS terminal 3 registers a sale relating to the merchandise being purchased based on the received tag information (including the individual merchandise information for specifying each item of merchandise to which a wireless tag is attached) read by the wireless tag reader 1. The POS terminal 3 also reads a code symbol attached to an item of merchandise and registers a sale relating to the corresponding merchandise. The POS terminal 3 settles the transaction for the merchandise for which the sale is registered.

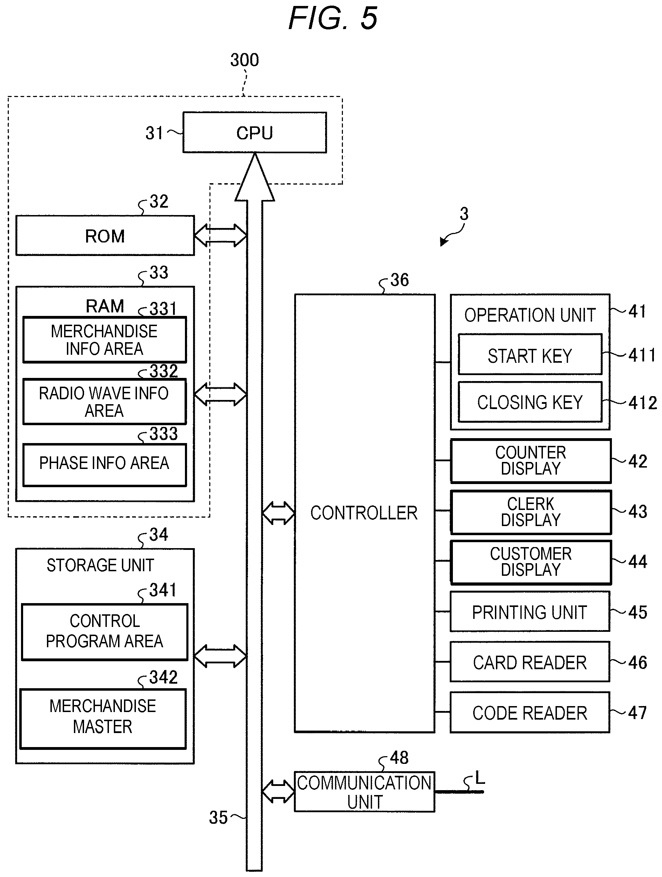

Here, the sales registration refers to processing of:
(1) reading merchandise information (such as a merchandise name and a price) from a merchandise master 342 (with reference to FIG. 5) based on the read tag information or read code symbols,
(2) displaying the read merchandise information, and (3) storing the merchandise information in a merchandise information area 331 (with reference to FIG. 5). The settlement of the transaction refers to processing of: (1) displaying a total amount and a tax amount relating to the transaction based on the merchandise information stored in the merchandise information area 331 according to the sales registration, (2) calculating and displaying the change due based on a payment by the customer, and (3) issuing a receipt on which the merchandise information and the settlement information (such as the total amount, the payment, and the change) are printed.

Hereinafter, the hardware of the wireless tag reader 1 is described. FIG. 4 is a hardware block diagram of the wireless tag reader 1. As illustrated in FIG. 4, the wireless tag reader 1 includes a central processing unit (CPU) 21, a read only memory (ROM) 22, a random access memory (RAM) 23, a storage unit 24, and the like. The CPU 21 is a processor that executes various programs. The ROM 22 stores various programs. The RAM 23 temporarily stores programs and various data. The storage unit 24 stores various programs. The CPU 21, the ROM 22, the RAM 23, and the storage unit 24 are connected to each other via a bus 25. The CPU 21, the ROM 22, and the RAM 23 make up the control unit 100. That is, the control unit 100 controls the wireless tag reader 1 as described below, by causing the CPU 21 to execute a control program(s) stored in the ROM 22 or the storage unit 24 and loaded in the RAM 23

The RAM 23 includes a radio wave storage area 231 and a coordinate storage area 232. The radio wave storage area 231 stores the information of the transmission wave transmitted from the antenna 16 and the information of all response waves received by the antenna 16 (hereinafter, the information of the transmission wave and the information of the response wave are referred to as "radio wave information", in combination) at a predetermined timing (the timing of movement by the first distance) for each individual merchandise information included in the response wave. The radio wave information is used for calculating a phase difference between the transmission wave and the response wave. The radio wave information is also used for specifying waveforms of the transmitted transmission wave and the received response waves. The radio wave information includes wireless tag information included in the response wave. The individual merchandise information is included in the wireless tag information.

The radio wave information includes the information about an intensity (signal strength) of the response wave. The radio wave intensity is information indicating how strongly the antenna 16 receives the response wave. In general, the antenna 16 receives a response wave from a wireless tag T that is more closely positioned with a stronger intensity than from a wireless tag T more distant from the antenna 16. That is, when the intensity of the received response wave is strong, the wireless tag T providing the response wave is considered to be close to the antenna 16, and when the intensity of the received response wave is weak, the wireless tag T providing the response wave is considered to be far from the antenna 16.

The control unit 100 calculates the coordinates of the position of the antenna 16 where the information of the response wave is stored, and the coordinate storage area 232 stores the coordinate information of the corresponding coordinates in correlation with the information of the corresponding response wave.

The storage unit 24 is a solid state drive (SSD), a hard disc drive (HDD), a flash memory, and the like, and maintains data even if the power is turned off. The storage unit 24 includes a control program area 241. The control program area 241 stores a control program(s) for controlling the wireless tag reader 1.

The control unit 100 is connected to the antenna 16 and a conveyance motor 28 via the bus 25 and a controller 26. The controller 26 reads the information of the response wave received by the antenna 16. The controller 26 controls the conveyance motor 28 to rotate in one direction or an opposite direction. If the conveyance motor 28 rotates, the moving mechanism 14 and the moving mechanism 15 rotate in one direction and an opposite direction.

The control unit 100 is connected to a communication unit 29 via the bus 25. The communication unit 29 can communicate with the POS terminal 3 via the communication line L.

Hereinafter, the hardware of the POS terminal 3 is described. FIG. 5 is a hardware block diagram of the POS terminal 3. As illustrated in FIG. 5, the POS terminal 3 includes a CPU 31, a ROM 32, a RAM 33, a storage unit 34, and the like. The CPU 31 is a processor that executes various programs. The ROM 32 stores various programs. The RAM 33 temporarily stores programs and various data. The storage unit 34 stores various programs. The CPU 31, the ROM 32, the RAM 33, and the storage unit 34 are connected to each other via a bus 35. The CPU 31, the ROM 32, and the RAM 33 make up a control unit 300. That is, the control unit 300 controls the POS terminal 3 as described below, by causing the CPU 31 to execute a control program(s) stored in the ROM 32 or the storage unit 34 and loaded in the RAM 33.

The RAM 33 includes the merchandise information area 331, a radio wave information area 332, and a phase information area 333. The merchandise information area 331 stores the merchandise information (such as a merchandise name and a price) of the corresponding merchandise in association with the merchandise code for specifying the merchandise. The radio wave information area 332 stores the radio wave information received from the wireless tag reader 1. The phase information area 333 stores the phase difference between the transmission wave and the response wave and the intensity of the radio wave of the response wave, which are obtained from the radio wave information. The phase information area 333 is described below with reference to FIG. 6.

The storage unit 34 is an SSD, an HDD, a flash memory, and the like, and maintains the stored content even if the power is turned off. The storage unit 34 includes a control program area 341 and the merchandise master 342. The control program area 341 stores a control program(s) for controlling the POS terminal 3. The merchandise master 342 stores the merchandise information of the corresponding merchandise in association with the merchandise code specifying the merchandise.

The control unit 300 is connected to an operation unit 41, the countertop display 42, a clerk display 43, a customer display 44, a printing unit 45, a card reader 46, and a code reader 47 via the bus 35 and a controller 36. The operation unit 41 is a keyboard or a touch key. The operation unit 41 includes a start key 411 and a closing key 412. If the start key 411 is operated, the control unit 300 transmits a start signal to the wireless tag reader 1. The closing key 412 is operated when the transaction with the customer ends in the POS terminal 3.

The clerk display 43 is, for example, a liquid crystal display, and displays the information to a clerk who is operating the POS terminal 3. The customer display 44 is, for example, a liquid crystal display, and displays the information to the customer. The printing unit 45 prints the merchandise information of the settled merchandise or the settlement information on a receipt. The card reader 46 reads the information, for example, of a credit card that is used in the settlement process. The code reader 47 reads the symbol attached to the merchandise optically. The code reader 47 may be an imaging device such as a camera.

The control unit 300 is connected to a communication unit 48 via the bus 35. The communication unit 48 can communicate with the wireless tag reader 1 via the communication line L.

Subsequently, the phase information area 333 is described. FIG. 6 is a data structure of phase information stored in the phase information area 333. As illustrated in FIG. 6, the phase information area 333 includes a coordinate area 3331, a phase difference area 3332, an intensity area 3333, and an individual merchandise information area 3334.

The individual merchandise information area 3334 stores the individual merchandise information (for example, an individual merchandise number) indicating a specific individual merchandise for the merchandise. The coordinate area 3331 stores the coordinate information of the antenna 16 at each predetermined position (here, each position of P11 to P115, P21 to P215, and P31 to P315). With respect to the response wave included in the individual merchandise information stored in the individual merchandise information area 3334, the phase difference area 3332 stores the phase difference between the transmission wave and the response wave, which is calculated from information about the response wave at each predetermined position and the transmission wave transmitted from the antenna 16. With respect to the response wave included in the individual merchandise information stored in the individual merchandise information area 3334, the intensity area 3333 stores the intensity of the radio wave of the response wave in each predetermined position. In FIG. 6, the phase information area 333 stores only the information of take 1, take 2, and take 3, but may store information for four or more times according to the movement of the antenna 16. When information about the response waves including the individual merchandise information of a plurality of merchandises is received, the control unit 300 generates and stores the information shown in FIG. 6 for each individual merchandise.

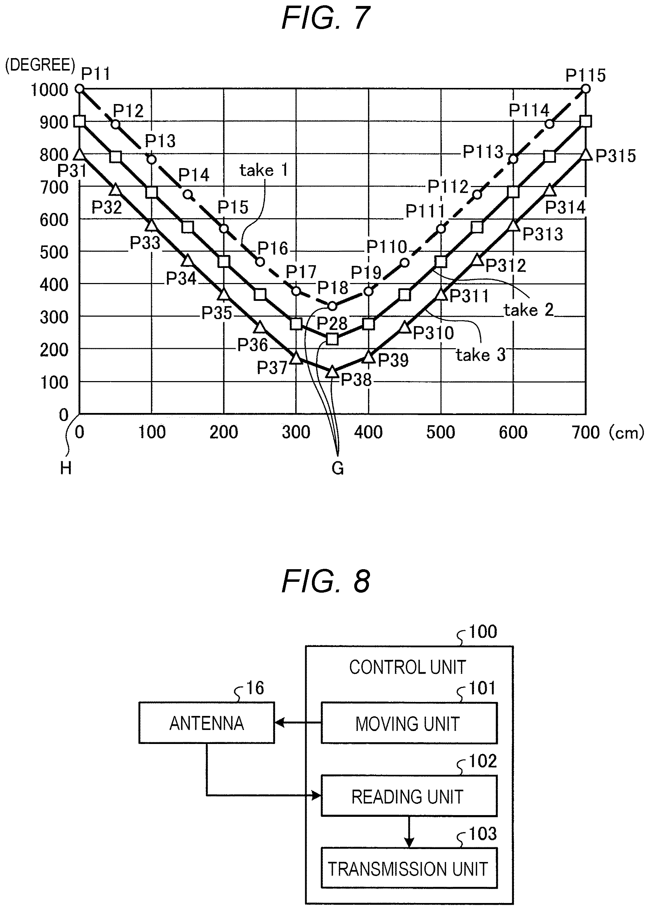

Here, the phase difference between the transmission waves and the response waves stored in the phase difference area 3332 is described with graphs. FIG. 7 is a diagram illustrating a variation of the phase difference between the transmission wave and the response wave. As illustrated in FIG. 7, the graph indicates a variation of the phase difference of the response wave to the transmission wave with respect to the wireless tag attached to the merchandises S (individual items of merchandise) illustrated in FIG. 3. In FIG. 7, the graph of take 1 indicates a phase difference between the transmission wave and the response wave in each predetermined position (P11 to P115) in the course in which the antenna 16 moves from the home position H (= P11) to the position T1 (= P115) along the X axis. In the graph of take 1, the phase difference between the transmission wave and the response wave from the position P11 to the position P18 gradually decreases, the phase difference between the transmission wave and the response wave is the smallest in the position P18, and the phase difference between the transmission wave and the response wave gradually increases from the position P18 to the position P115. This indicates that, in the course in which the antenna 16 moves from a home position H to the position T1 along the X axis, the antenna 16 gradually comes close to the merchandise S and is the closest to the merchandise S in the position of the position P18, and then the antenna 16 gradually goes far from the merchandise S.

The graph of take 2 indicates the phase difference between the transmission wave and the response wave in each predetermined position (P21 to P215) in the course in which the antenna 16 moves from the position T2 (= P215) to the position T3 (= P21) along the X axis. In the graph of take 2, the phase difference between the transmission wave and the response wave gradually decreases from the position P215 to the position P28, the phase difference between the transmission wave and the response wave is the smallest in the position P28, and the phase difference between the transmission wave and the response wave gradually increases from the position P28 to the position P21. This indicates that, in the course in which the antenna 16 moves from the position T2 to the position T3 along the X axis, the antenna 16 gradually comes close to the merchandise S and is the closest to the merchandise S in the position of the position P28, and then the antenna 16 gradually goes far from the merchandise S.

The graph of take 3 indicates the phase difference between the transmission wave and the response wave in each predetermined position (P31 to P315) in the course in which the antenna 16 moves from the position T4 (= P31) to the position T5 (= P315) along the X axis. In the graph of take 3, the phase difference between the transmission wave and the response wave gradually decreases from the position P31 to the position P38, the phase difference between the transmission wave and the response wave is the smallest in the position P38, and the phase difference between the transmission wave and the response wave gradually increases from the position P38 to the position P315. This indicates that, in the course in which the antenna 16 moves from the position T4 to the position T5 along the X axis, the antenna 16 gradually comes close to the merchandise S and is the closest to the merchandise S in the position of the position P38, and then the antenna 16 gradually goes far from the merchandise S.

The positions (in this example, the position P18, the position P28, and the position P38) where the phase difference changes from decreasing to increasing are hereinafter called an inflection point.

When the phase difference in the position P18, the phase difference in the position P28, and the phase difference in the position P38 are compared with each other, the phase difference in the position P38 is the smallest. This indicates that, when the antenna 16 is positioned in the position P38, the antenna 16 is positioned in a position the closest to the merchandise S. Therefore, the control unit 300, for example, controls the countertop display 42 to display an indicator at a position corresponding to the coordinates of the position P38 to notify a clerk of the location of the merchandise S to which a wireless tag is attached.

If the phase difference exceeds 360°, when an unwrap process is not performed, the phase difference starts from 0°, again. That is, a phase difference in the position where the phase difference exceeds 360° becomes the same as the one in the position where the phase difference of 360° is reset back to 0°. Therefore, the position of the merchandise S can be correctly specified by simultaneously checking the intensities of the radio waves of the response waves at the inflection points (here, the position P18, the position P28, and the position P38 in this example) in addition to the phase differences. Here, the intensity of the response wave in the position P18, the intensity of the response wave in the position P28, and the intensity of the response wave in the position P38 are compared with each other, and a position at which the intensity (the position P38 in this example) is the strongest becomes a position to be expressly indicated on the countertop display 42. The graph of FIG. 7 has values obtained by adding 360° to the calculated phase difference when the phase difference exceeds 360° (referred to as an unwrap process).

Hereinafter, functions of the wireless tag reader 1 are described. FIG. 8 is a function block diagram of the wireless tag reader 1. As illustrated in FIG. 8, the control unit 100 of the wireless tag reader 1 functions as a moving unit 101, a reading unit 102, and a transmission unit 103 according to the control programs stored in the control program area 241 and loaded in the RAM 23.

The moving unit 101 drives the conveyance motor 28 and rotates the moving mechanism 14 and the moving mechanism 15 to move the antenna 16 in the X axis direction and the Y axis direction.

The reading unit 102 stores the information of the response wave received by the antenna 16 in each predetermined position (P11 to P115, P21 to P215, and P31 to P315), in the radio wave storage area 231. The reading unit 102 stores information about the received response wave in correlation with information about the transmission wave. The reading unit 102 acquires and stores the coordinate information of each predetermined position in the radio wave storage area 231.

The transmission unit 103 controls the communication unit 29 to transmit the radio wave information stored in the radio wave storage area 231 to the POS terminal 3. When the antenna 16 reaches the position T5, the transmission unit 103 controls the communication unit 29 to transmit the radio wave information stored in the radio wave storage area 231 to the POS terminal 3.

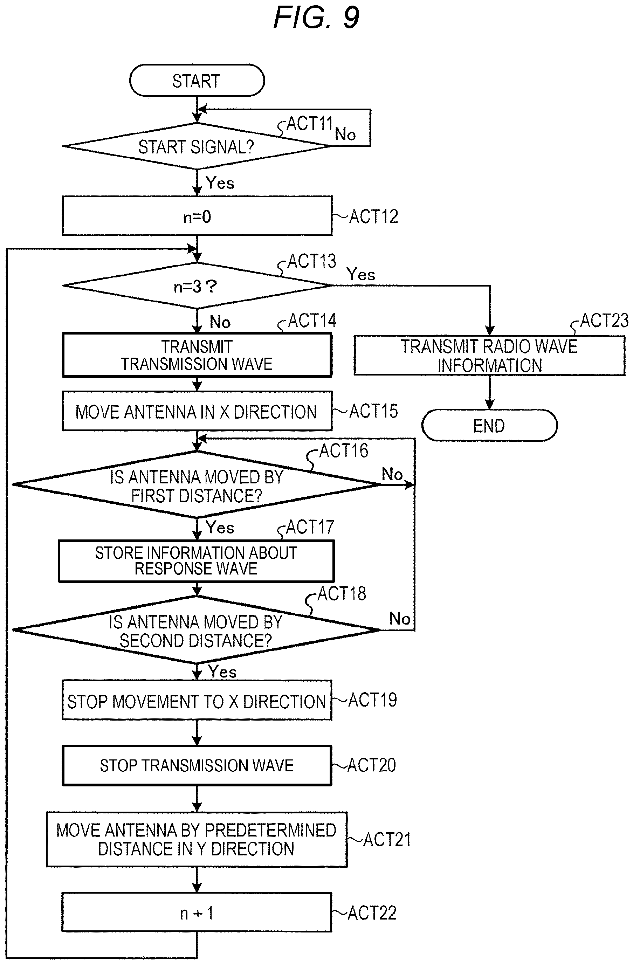

Hereinafter, the control processing performed by the wireless tag reader 1 is described. FIG. 9 is a flow chart of the control processing performed by the wireless tag reader 1. As illustrated in FIG. 9, the control unit 100 of the wireless tag reader 1 determines whether a start signal has been received from the POS terminal 3 (ACT 11). The control unit 100 waits until the start signal has been received from the POS terminal 3 (No in ACT 11). When it is determined that a start signal has been received from the POS terminal 3 (Yes in ACT 11), the control unit 100 sets "0" to a variable "n" stored in the RAM 23 (ACT 12).

Subsequently, the control unit 100 determines whether the value of "n" is 3 (ACT 13). In this example, since the antenna 16 moves three times of take 1, take 2, and take 3 in the X axis direction and ends the reception of the response waves, it is determined whether n = 3 is satisfied in ACT 13. In practice, it is determined whether the value of "n" is the number of times of the movement of the antenna 16 in the X axis direction. It is determined that n = 3 is not satisfied (that is, any one of n = 0, n = 1, and n = 2) (No in ACT 13), the control unit 100 controls the controller 26 to transmit transmission waves from the antenna 16 and stores the information of the corresponding transmission wave in the radio wave storage area 231 (ACT 14). In such case, the reading unit 102 also stores the information of the response wave received corresponding to the transmitted transmission wave in the radio wave storage area 231 (ACT 14). The reading unit 102 stores the coordinate information of the corresponding position (here, the home position H). Subsequently, the moving unit 101 controls the conveyance motor 28 to start to move the antenna 16 positioned in the home position H in the X axis direction (ACT 15).

Subsequently, the control unit 100 determines whether the antenna 16 moves from the home position H (here, the position P11) and is positioned in the position P12 separated by the first distance (ACT 16). It is determined that the antenna 16 is not positioned in the position P12 (that is, the antenna 16 has not reached the position P12) (No in ACT 16), the moving unit 101 controls the conveyance motor 28 to continue to move the antenna 16 in the X axis direction. It is determined that the antenna 16 is positioned in the position P12 (Yes in ACT 16), the reading unit 102 also stores the information in the response wave received corresponding to the transmitted transmission wave in the radio wave storage area 231 (ACT 17) . The reading unit 102 stores the coordinate information of the position P12 in the radio wave storage area 231 (ACT 17). The reading unit 102 stores the received response wave and the coordinate information of the position P12 in correlation with the information of the stored transmission wave.

Subsequently, the control unit 100 determines whether the antenna 16 is positioned in the position T1 (here, the position P115) separated from the home position H by the second distance (ACT 18). It is determined that the antenna 16 is not positioned (that is, the antenna 16 has not reached the position T1) in the position T1 separated from the home position H by the second distance (No in ACT 18), the control unit 100 returns to ACT 16 and performs the determination (determination on the movement from the position P12 by the first distance) of ACT 16 and repeats the processing of ACT 17. In this manner, with respect to each position of the antenna 16 from the position P11 to the position P115, the control unit 100 stores the information of the response waves and the coordinate information of each position in the radio wave storage area 231 in association with the transmission waves. The determination on whether the antenna 16 has moved by the first distance and the determination on whether the antenna 16 has moved by the second distance which are performed by the control unit 100 are based on the number of times of rotation of the conveyance motor 28.

Meanwhile, when it is determined that the antenna 16 is positioned in the position T1 in ACT 18 (Yes in ACT 18), the control unit 100 controls the conveyance motor 28 to stop moving the antenna 16 in the X axis direction (ACT 19). The control unit 100 controls the controller 26 to stop transmitting the transmission waves from the antenna 16 (ACT 20). The moving unit 101 controls the conveyance motor 28 to rotate the moving mechanism 15 to move the antenna 16 in the Y axis direction by the predetermined distance (ACT 21). The control unit 100 increments the variable n (that is, to n = 1) (ACT 22). The control unit 100 returns to ACT 13 and repeats ACT 13 and subsequent processing. That is, if n = 3 is not satisfied, while the antenna 16 is moved from T2 here, the position P215) to T3 here, the position P21) in the X axis direction, the information of response waves in the positions P215 to P21 and the coordinate information of each position are stored in the radio wave storage area 231 in correlation with the transmission waves.

If the antenna 16 has moved from the position T2 to the position T3, the control unit 100 controls the conveyance motor 28 to move the antenna 16 to the position T4 in the Y axis direction. The control unit 100 increments the variable n stored in the RAM 23 (that is, to n = 2) (ACT 22). The control unit 100 returns to ACT 13 and repeats processing of ACT 13 and subsequent processing. That is, if n = 3 is not satisfied, while the antenna 16 is moved from T4 (here, the position P31) to T5 (here, the position P315) in the X axis direction, the information of the response wave in the positions P31 to P315 and the coordinate information of each position are stored in the radio wave storage area 231 in correlation with the transmission wave. If the antenna 16 has moved from the position T4 to the position T5, the antenna 16 moves back to the home position H. The control unit 100 increments the variable n stored in the RAM 23 (that is, to n = 3) (ACT 22) . The control unit 100 returns back to ACT 13.

The control unit 100 performs determination of ACT 13 again. Here, since n = 3 is satisfied, the determination of ACT 13 is Yes. Therefore, the transmission unit 103 controls the communication unit 29 to transmit the radio wave information (such as the information of the transmission waves, the information of the response waves, the coordinate information, and the tag information) stored in the radio wave storage area 231 to the POS terminal 3 (ACT 23). Then, the control unit 100 ends the processing.

The wireless tag reader 1 includes the movable antenna 16 and transmits a transmission wave from the antenna 16 and also receives a response wave transmitted by the wireless tag T with respect to the corresponding transmission wave while the antenna 16 moves, to read tag information from a wireless tag T attached to an item of merchandise. The wireless tag reader 1 transmits a transmission wave and receives a modulated response wave from the wireless tag T in response to the transmission wave. The transmission wave and the response wave will have different phases from each other. The wireless tag reader 1 stores information about the transmission wave and information about the response wave in a correlating manner and transmits this information to the POS terminal 3.

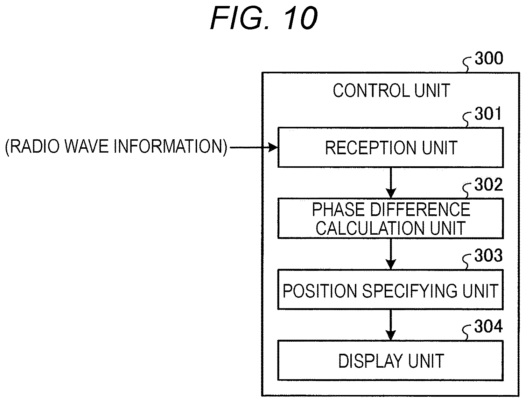

Hereinafter, functions of the POS terminal 3 are described. FIG. 10 is a function block diagram of the POS terminal 3. As illustrated in FIG. 10, the control unit 300 of the POS terminal 3 functions as a reception unit 301, a phase difference calculation unit 302, a position specifying unit 303, and a display unit 304 according to the control programs that are stored in the control program area 341 and loaded in the RAM 33.

The reception unit 301 acquires from the wireless tag reader 1: (1) information about the transmission wave transmitted from the antenna 16 included in the wireless tag reader 1 while moving along the upper surface 12, (2) information about the response wave transmitted by the wireless tag T upon the reception of the transmission wave, and (3) the radio wave information including the coordinate information. Specifically, the reception unit 301 acquires the information of the transmission wave, the information of the response wave, and the coordinate information of the predetermined positions (here, positions P11 to P115, P21 to P215, and P31 to P315) from the wireless tag reader 1 and stores the information in the radio wave information area 332.

The phase difference calculation unit 302 calculates the phase difference of each response wave with respect to the transmission wave based on the information of the transmission waves stored in the radio wave information area 332 and the information of the response waves in the predetermined positions (here, positions P11 to P115, P21 to P215, and P31 to P315) . The calculation of the phase difference is to obtain how much phases of the response waves are deviated with respect to the transmission waves.

The position specifying unit 303 specifies the position of the merchandise specified in the individual merchandise information placed on the upper surface 12 based on the phase difference between the transmission waves and the response waves for each wireless tag T. Specifically, the position specifying unit 303 calculates the phase difference between the transmission waves and the response waves based on the transmission waves transmitted by the antenna 16 and the response waves transmitted by the wireless tag T with respect to the merchandises S to which the wireless tags T are attached, and specifies the positions the merchandises S based on the coordinate information of the position (inflection point) where the corresponding phase difference is the smallest. The position specifying unit 303 may specify the positions of the merchandises S in consideration of the intensities of the response waves at the inflection points.

The display unit 304 controls the countertop display 42 to displays indications at the positions which are specified by the position specifying unit 303. Specifically, when the countertop display 42 is a liquid crystal display, the countertop display 42 notifies a clerk of the locations of the merchandises S to which wireless tags are attached, for example, by displaying some indicators at those locations. When the countertop display 42 is an aggregate of LEDs, one or more LEDs corresponding to the locations of the merchandises S to which wireless tags are attached are turned on.

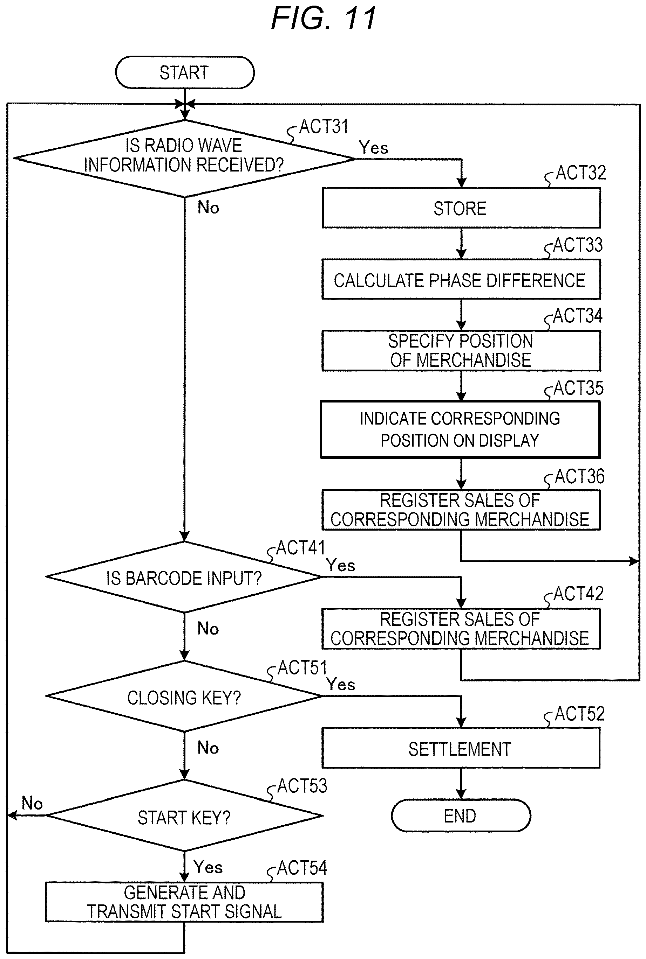

Hereinafter, the control processing performed by the POS terminal 3 is described. FIG. 11 is a flow chart of the control processing performed by the POS terminal 3. The control unit 300 of the POS terminal 3 determines whether the radio wave information has been received from the wireless tag reader 1 (ACT 31). When it is determined that the radio wave information has been received from the wireless tag reader 1 (Yes in ACT 31), the reception unit 301 stores the radio wave information in the radio wave information area 332 (ACT 32). Subsequently, the phase difference calculation unit 302 calculates phase differences of the response waves in predetermined positions (positions P11 to P115, P21 to P215, and P31 to P315) with respect to the transmission waves based on the radio wave information accepted by the reception unit 301 (ACT 33).

Subsequently, the position specifying unit 303 specifies the positions of the merchandises placed on the upper surface 12 based on the information of the phase differences calculated by the phase difference calculation unit 302 (ACT 34). Subsequently, the display unit 304 controls the countertop display 42 to indicate the locations corresponding to the positions (or coordinates) specified by the position specifying unit 303 (ACT 35). The operator of the POS terminal 3 recognizes that the merchandises S positioned in the indicated locations are merchandises to which the wireless tags T are attached. Subsequently, the control unit 100 registers those merchandises based on the corresponding tag information included in the radio wave information (ACT 36). The control unit 300 returns back to ACT 31.

Meanwhile, it is determined that the radio wave information has not received in ACT 31 (No in ACT 31), the control unit 300 determines whether a symbol has been read by the code reader 47 (ACT 41). The operator of the POS terminal 3 operates the code reader 47 to read the code symbol for an item of merchandise (here, the merchandise S4 of FIG. 2) for which the position is not indicated by the display unit 304. If it is determined that the symbol has been read by the code reader 47 (Yes in ACT 41), the control unit 300 registers the merchandise based on the merchandise code acquired from the read symbol (ACT 42). The control unit 300 returns back to ACT 31.

If it is determined that a symbol has not been read (No in ACT 41), the control unit 300 determines whether the closing key 412 has been operated (ACT 51). If it is determined that the closing key 412 has been operated (Yes in ACT 51), the control unit 300 performs settlement relating to the corresponding transaction based on the merchandise information stored in the merchandise information area 331 (ACT 52). The control unit 300 ends the processing.

If it is determined that the closing key 412 has not been operated (No in ACT 51), the control unit 300 determines whether the start key 411 has been operated (ACT 53). It is determined that the start key 411 has been operated (Yes in ACT 53), the control unit 300 generates a start signal and controls the communication unit 48 to transmit the start signal to the wireless tag reader 1 (ACT 54). The control unit 300 returns back to ACT 31. If it is determined that the start key 411 has not been operated (No in ACT 53), the control unit 300 returns back to ACT 31.

According to the embodiments described above, the POS terminal 3 expressly indicates on the countertop display 42 the location of an item of merchandise to which the wireless tag T is attached, among all items of merchandise placed on the upper surface 12 of the countertop display 42. Therefore, the operator of the POS terminal 3 can easily distinguish an item of merchandise to which the wireless tag T is attached from other items placed on the upper surface 12.

According to the embodiments described above, with respect to an item of merchandise to which the wireless tag T is not attached among the items placed on the upper surface 12 of the countertop display 42, the corresponding position on the countertop display 42 is not expressly indicated. Therefore, the operator can more easily separate the items on which a wireless tag T has been attached from items on which a wireless tag T has not been attached, by removing those merchandise items from the upper surface 12 which are not expressly indicated as having a wireless tag. In this context, an item of merchandise to which a wireless tag T is not attached includes an item of merchandise to which only a code symbol is attached, an item of merchandise to which a wireless tag T cannot be attached, an item of merchandise to which the wireless tag T was previously attached but for which the wireless tag has malfunctioned or been removed, or the like. In this manner, according to the embodiments described above, an item of merchandise with a wireless tag T can be distinguished from items of merchandise without a wireless tag T.

According to the embodiments described above, the POS terminal 3 receives the information of a transmission wave and the information of a response wave so that the POS terminal 3 calculates the phase difference between the transmission wave and the response wave based on the corresponding information of the transmission wave and the corresponding information of the response wave. However, the embodiments are not limited thereto. For example, the phase difference between the transmission wave and the response wave may be calculated based on the information of the transmission wave and the information of the response wave by the wireless tag reader 1, so that the POS terminal 3 receives the information of the calculated phase difference.

In the embodiments described above, the merchandise S sold in a store is described as an example of an article. However, the embodiments are not limited thereto, and the embodiments can be also applied to an article other than the merchandise, for example, an article carried into a warehouse or an article carried out of a warehouse.

According to the embodiments described above, the POS terminal 3 is described as an example of an information processing device. However, the embodiments are not limited thereto, and the information processing device may be, for example, a merchandise information registration device in a semi-self-service-type POS system. The information processing device may be, for example, a self-service POS terminal. The information processing device may be, for example, a personal computer or a server.

According to the embodiments described above, the countertop display 42 has an upper surface 12, and a liquid crystal display panel and/or a plurality of LEDs are provided overlapping by the upper surface 12, so that the location of the merchandise S placed on the upper surface 12 can be expressly indicated.

The programs executed by the POS terminal 3 of the example embodiments described above can be provided as installable or executable files and can be copied from a non-transitory computer-readable recording medium such as a CD-ROM, a flexible disk (FD), a CD-R, and a digital versatile disc (DVD).

The programs executed by the POS terminal 3 of the example embodiments described above may also or instead be stored on a computer connected to a network such as the Internet and downloaded via the network. The programs executed by the POS terminal 3 of the embodiments described above may be executed over a network such as the Internet.

The programs executed by the POS terminal 3 of the embodiments described above may be stored in a ROM or the like in advance.

While certain embodiments have been described, these embodiments have been presented by way of example only, and are not intended to limit the scope of the inventions. Indeed, the novel embodiments described herein may be embodied in a variety of other forms.

## Claims

1. An information processing apparatus (1), comprising:
a table (11) with an embedded display device (42) having a surface (12) on which an object (S1, S2, S3) with a wireless tag (T) can be placed;
an antenna unit (16) that is configured to move along a predetermined path and to transmit an interrogation wave for reading information from wireless tags (T) and receive a response wave from wireless tags (T) at different positions on the predetermined path; and
a controller configured to:
calculate changes in phase difference between the interrogation wave and the response wave received at the different positions,
determine a location of a wireless tag (T) on the surface (12) of the embedded display device (42) using the calculated changes in the phase difference, and
control the embedded display device (42) to indicate the determined location.

2. The information processing apparatus (1) according to claim 1, wherein the predetermined path is below the surface (12) of the embedded display device (42).

3. The information processing apparatus (1) according to claim 1 or 2, wherein the controller determines the location of the wireless tag (T) as position having with a smallest phase difference between the interrogation wave and response wave.

4. The information processing apparatus (1) according to any of claims 1 to 3, wherein the controller is further configured to determine intensities of the response waves at the different positions, and the location of the wireless tag (T) is determined using the determined intensities, preferably comprising:
a memory, wherein
the controller is further configured to store in the memory the phase differences and the intensities of the response waves in association with coordinates indicating the different positions on the predetermined path.

5. The information processing apparatus (1) according to any of claims 1 to 4, further comprising:
a moving mechanism (14,15) to which the antenna unit (16) is attached.

6. The information processing apparatus (1) according to any of claims 1 to 5, further comprising:
a plurality of metal walls (13) arranged on edges of the surface (12) of the embedded display device (42).

7. The information processing apparatus (1) according to any of claims 1 to 6, wherein the embedded display device (42) includes a two-dimensional array of LEDs.

8. The information processing apparatus (1) according to any of claims 1 to 7, wherein the controller is further configured to register the object in a sales transaction based on product information included in the response wave.

9. The information processing apparatus (1) according to any of claims 1 to 8, further comprising:
an optical code reader configured to read a code symbol on an object.

10. An information processing method, comprising:
transmitting, from a movable antenna (16), an interrogation wave toward a wireless tag (T) attached to an object (S1, S2, S3) placed on a surface (12) of a display device (42);
receiving, with the movable antenna, a response wave from the wireless tag (T) at different positions on a predetermined movement path of the antenna;
calculating changes in phase difference between the interrogation wave and the response wave at the different positions;
identifying a location of the wireless tag (T) on the surface (12) of the display device using the calculated changes in the phase difference; and
controlling the display device to indicate the identified location of the wireless tag.

11. The method according to claim 10, wherein the predetermined path is under the surface (12) of the display device, wherein preferably the location of the wireless tag (T) is identified as the position on the predetermined path at which the calculated phase difference is the smallest.

12. The method according to claim 10 or 11, further comprising:
determining intensities of the response wave at the different positions, wherein
the location of the wireless tag (T) is determined using the determined intensities.

13. The method according to any of claims 10 to 12, wherein the movable antenna is moved by a moving mechanism (14,15) under the surface (12) of the display along longitudinal and lateral directions of the display device.

14. The method according to any of claims 10 to 13, wherein the object (S1, S2, S3) is an item of merchandise in a sales transaction.

15. An information processing system (10) comprising:
an information processing apparatus (1) according to any of claims 1 to 9 and
a point of sale terminal (3) communicably connected to the information processing apparatus (1).

## Patentansprüche

1. Informationsverarbeitungseinrichtung (1), umfassend:
einen Tisch (11) mit einer eingebetteten Anzeigevorrichtung (42), die eine Oberfläche (12) aufweist, auf die ein Objekt (S1, S2, S3) mit einem drahtlosen Etikett (T) platziert werden kann;
eine Antenneneinheit (16), die so konfiguriert ist, dass sie sich entlang eines vorbestimmten Weges bewegt und eine Abfragewelle zum Lesen von Informationen von drahtlosen Etiketten (T) sendet und eine Antwortwelle von drahtlosen Etiketten (T) an verschiedenen Positionen auf dem vorbestimmten Weg empfängt; und
eine Steuerung, die konfiguriert ist zum:
Berechnen der Änderungen der Phasendifferenz zwischen der Abfragewelle und der an den verschiedenen Positionen empfangenen Antwortwelle,
Bestimmen eines Standortes eines drahtlosen Etiketts (T) auf der Oberfläche (12) der eingebetteten Anzeigevorrichtung (42) unter Verwendung der berechneten Änderungen in der Phasendifferenz, und
Steuern der eingebetteten Anzeigevorrichtung (42), um den ermittelten Standort anzugeben.

2. Informationsverarbeitungseinrichtung (1) nach Anspruch 1, wobei der vorbestimmte Pfad unterhalb der Oberfläche (12) der eingebetteten Anzeigevorrichtung (42) liegt.

3. Informationsverarbeitungseinrichtung (1) nach Anspruch 1 oder 2, wobei die Steuerung den Standort des drahtlosen Etiketts (T) als Standort bestimmt, die die kleinste Phasendifferenz zwischen der Abfrage- und der Antwortwelle aufweist.

4. Informationsverarbeitungseinrichtung (1) nach einem der Ansprüche 1 bis 3, wobei die Steuerung weiter so konfiguriert ist, dass sie Intensitäten der Antwortwellen an den verschiedenen Positionen bestimmt, und der Standort des drahtlosen Etiketts (T) unter Verwendung der bestimmten Intensitäten bestimmt wird, bevorzugt umfassend:
einen Speicher, wobei
die Steuerung weiter so konfiguriert ist, dass sie in dem Speicher die Phasendifferenzen und die Intensitäten der Antwortwellen in Verbindung mit Koordinaten speichert, die die verschiedenen Positionen auf dem vorbestimmten Pfad angeben.

5. Informationsverarbeitungseinrichtung (1) nach einem der Ansprüche 1 bis 4, weiter umfassend:
einen Bewegungsmechanismus (14, 15), an dem die Antenneneinheit (16) befestigt ist.

6. Informationsverarbeitungsgerät (1) nach einem der Ansprüche 1 bis 5, weiter umfassend:
eine Vielzahl von Metallwänden (13), die an den Kanten der Oberfläche (12) der eingebetteten Anzeigevorrichtung (42) angeordnet sind.

7. Informationsverarbeitungseinrichtung (1) nach einem der Ansprüche 1 bis 6, wobei die eingebettete Anzeigevorrichtung (42) eine zweidimensionale Anordnung von LEDs einschließt.

8. Informationsverarbeitungseinrichtung (1) nach einem der Ansprüche 1 bis 7, wobei die Steuerung weiter so konfiguriert ist, dass sie das Objekt in einer Verkaufstransaktion auf der Grundlage der in der Antwortwelle enthaltenen Produktinformationen registriert.

9. Informationsverarbeitungseinrichtung (1) nach einem der Ansprüche 1 bis 8, weiter umfassend:
einen optischen Codeleser, der zum Lesen eines Codesymbols auf einem Objekt konfiguriert ist.

10. Informationsverarbeitungsverfahren, umfassend:
Senden, von einer beweglichen Antenne (16), einer Abfragewelle zu einem drahtlosen Etikett (T), das an einem Objekt (S1, S2, S3) befestigt ist, das auf einer Oberfläche (12) einer Anzeigevorrichtung (42) platziert ist;
Empfangen, mit der beweglichen Antenne, einer Antwortwelle von dem drahtlosen Etikett (T) an verschiedenen Positionen auf einem vorbestimmten Bewegungspfad der Antenne;
Berechnen der Änderungen der Phasendifferenz zwischen der Abfragewelle und der Antwortwelle an den verschiedenen Positionen;
Identifizieren eines Standortes des drahtlosen Etiketts (T) auf der Oberfläche (12) der Anzeigevorrichtung unter Verwendung der berechneten Änderungen der Phasendifferenz; und
Steuern der Anzeigevorrichtung, um den identifizierten Standort des drahtlosen Etiketts anzugeben.

11. Verfahren nach Anspruch 10, wobei sich der vorbestimmte Pfad unter der Oberfläche (12) der Anzeigevorrichtung befindet, wobei bevorzugt der Ort des drahtlosen Etiketts (T) als der Standort auf dem vorbestimmten Pfad identifiziert wird, an dem die berechnete Phasendifferenz am kleinsten ist.

12. Verfahren nach Anspruch 10 oder 11, weiter umfassend:
Bestimmen der Intensitäten der Antwortwelle an den verschiedenen Positionen, wobei
der Standort des drahtlosen Etiketts (T) unter Verwendung der bestimmten Intensitäten bestimmt wird.

13. Verfahren nach einem der Ansprüche 10 bis 12, wobei die bewegliche Antenne durch einen Bewegungsmechanismus (14, 15) unter der Oberfläche (12) der Anzeigevorrichtung in Längs- und Querrichtung der Anzeigevorrichtung bewegt wird.

14. Verfahren nach einem der Ansprüche 10 bis 13, wobei das Objekt (S1, S2, S3) eine Handelsware in einem Verkaufsgeschäft ist.

15. Informationsverarbeitungssystem (10), umfassend:
eine Informationsverarbeitungseinrichtung (1) nach einem der Ansprüche 1 bis 9 und
ein Verkaufsstellenterminal (3), das mit dem Informationsverarbeitungsgerät (1) verbunden ist.

## Revendications

1. Appareil de traitement d'informations (1) comprenant :
une table (11) avec un dispositif d'affichage intégré (42) comportant une surface (12) sur laquelle un objet (S1, S2, S3) avec une étiquette sans fil (T) peut être placé ;
une unité d'antenne (16) qui est configurée pour se déplacer suivant un trajet prédéterminé et pour transmettre une onde d'interrogation pour la lecture d'information à partir d'étiquettes sans fil (T) et recevoir une onde de réponse à partir d'étiquettes sans fil (T) au niveau de différentes positions sur le trajet prédéterminé ; et
un dispositif de commande configuré pour :
calculer des variations de différence de phase entre l'onde d'interrogation et l'onde de réponse reçue au niveau des différentes positions,
déterminer un emplacement d'une étiquette sans fil (T) sur la surface (12) du dispositif d'affichage intégré (42) en utilisant les variations calculées dans la différence de phase, et
commander le dispositif d'affichage intégré (42) pour indiquer l'emplacement déterminé.

2. Appareil de traitement d'informations (1) selon la revendication 1, dans lequel le trajet prédéterminé est au-dessous de la surface (12) du dispositif d'affichage intégré (42).

3. Appareil de traitement d'informations (1) selon la revendication 1 ou 2, dans lequel le dispositif de commande détermine l'emplacement de l'étiquette sans fil (T) comme une position présentant une plus petite différence de phase entre l'onde d'interrogation et l'onde de réponse.

4. Appareil de traitement d'informations (1) selon l'une quelconque des revendications 1 à 3, dans lequel le dispositif de commande est configuré en outre pour déterminer des intensités des ondes de réponse au niveau des différentes positions, et l'emplacement de l'étiquette sans fil (T) est déterminé en utilisant les intensités déterminées, comprenant de préférence :
une mémoire, dans lequel
le dispositif de commande est configuré en outre pour stocker dans la mémoire les différences de phase et les intensités des ondes de réponse en association avec des coordonnées indiquant les différentes positions sur le trajet prédéterminé.

5. Appareil de traitement d'informations (1) selon l'une quelconque des revendications 1 à 4, comprenant en outre :
un mécanisme mobile (14, 15) auquel l'unité d'antenne (16) est attachée.

6. Appareil de traitement d'informations (1) selon l'une quelconque des revendications 1 à 5, comprenant en outre :
une pluralité de parois métalliques (13) disposées sur des bords de la surface (12) du dispositif d'affichage intégré (42).

7. Appareil de traitement d'informations (1) selon l'une quelconque des revendications 1 à 6, dans lequel le dispositif d'affichage intégré (42) comprend un réseau bidimensionnel de LED.

8. Appareil de traitement d'informations (1) selon l'une quelconque des revendications 1 à 7, dans lequel le dispositif de commande est configuré en outre pour enregistrer l'objet dans une transaction de vente sur la base d'informations de produit comprises dans l'onde de réponse.

9. Appareil de traitement d'informations (1) selon l'une quelconque des revendications 1 à 8, comprenant en outre :
un lecteur de code optique configuré pour lire un symbole de code sur un objet.

10. Procédé de traitement d'informations comprenant :
la transmission, à partir d'une antenne mobile (16), d'une onde d'interrogation vers une étiquette sans fil (T) attachée à un objet (S1, S2, S3) placé sur une surface (12) d'un dispositif d'affichage intégré (42) ;
la réception, avec l'antenne mobile, d'une onde de réponse à partir de l'étiquette sans fil (T) au niveau de différentes positions sur un trajet de déplacement prédéterminé de l'antenne ;
le calcul de variations de différence de phase entre l'onde d'interrogation et l'onde de réponse au niveau des différentes positions ;
l'identification d'un emplacement de l'étiquette sans fil (T) sur la surface (12) du dispositif d'affichage en utilisant les variations calculées dans la différence de phase ; et
la commande du dispositif d'affichage pour indiquer l'emplacement identifié de l'étiquette sans fil.

11. Procédé selon la revendication 10, dans lequel le trajet prédéterminé est au-dessous de la surface (12) du dispositif d'affichage, dans lequel, de préférence, l'emplacement de l'étiquette sans fil (T) est identifié comme la position sur le trajet prédéterminé au niveau de laquelle la différence de phase calculée est la plus petite.

12. Procédé selon la revendication 10 ou 11, comprenant en outre :
la détermination d'intensités des ondes de réponse au niveau des différentes positions, dans lequel
l'emplacement de l'étiquette sans fil (T) est déterminé en utilisant les intensités déterminées.

13. Procédé selon l'une quelconque des revendications 10 à 12, dans lequel l'antenne mobile est déplacée par un mécanisme mobile (14, 15) sous la surface (12) du dispositif d'affichage suivant des directions longitudinale et latérale du dispositif d'affichage.

14. Procédé selon l'une quelconque des revendications 10 à 13, dans lequel l'objet (S1, S2, S3) est un article de marchandise dans une transaction de vente.

15. Système de traitement d'informations (10) comprenant :
un appareil de traitement d'informations (1) selon l'une quelconque des revendications 1 à 9 et
un terminal de point de vente (3) connecté de manière communicative à l'appareil de traitement d'informations (1).
